# EUROPEAN PATENT APPLICATION

(11) **EP 4 603 225 A1**
(43) Date of publication of application: **20.08.2025**
(21) Application number: 23885458.2
(22) Date of filing: 06.10.2023
(51) Int. Cl.: B23Q 17/24, B23Q 11/08

(54) **MACHINE TOOL**

(30) Priority: 04.11.2022 JP 2022176898
(71) Applicant: DMG Mori Co., Ltd., Yamatokoriyama-shi, Nara 639-1160 (JP)
(72) Inventor: KATO, Yasutaka, Yamatokoriyama-shi, Nara 639-1160 (JP); KAJIHARA, Daichi, Yamatokoriyama-shi, Nara 639-1160 (JP); HATTORI, Ryotaro, Yamatokoriyama-shi, Nara 639-1160 (JP); TAGA, Mitsuru, Yamatokoriyama-shi, Nara 639-1160 (JP)
(74) Representative: Isarpatent
(86) International application number: PCT/JP2023/036502
(87) International publication number: WO 2024/095695

(57) **Abstract**

Provided is a machine tool (100) that includes: a cover body (80) that forms a machining area for machining a workpiece as a compartment; a discharge unit (265) configured to discharge coolant to the workpiece; a first work spindle (110) configured to hold the workpiece so that the workpiece is rotatable; a tool spindle (130) located at a position higher than the first work spindle (110) and holding a tool so that the tool is rotatable; and a plurality of cameras (250) arranged within the machining area. Each of the plurality of cameras (250) is arranged at a position that is higher than the first work spindle (110), and is lower than a ceiling in the machining area so that a machining point of the workpiece, where machining by the tool takes place, is included in a shooting view field of the camera.

## Description

### Technical Field

The present disclosure relates to a machine tool.

### Background Art

Conventionally, machine tools equipped with cameras in the machine are known. As an example, JP 2018-94689A (Patent Document 1) discloses a machine tool for monitoring a machining area from multiple directions using multiple cameras. Three cameras are provided inside the machine tool to monitor the machining area. The three cameras are arranged at the same height as a work spindle for holding a workpiece.

### Citation List

### Patent Document

Patent Document 1: JP 2018-94689A

### Summary of Invention

### Technical Problem

If each camera is arranged at the same height as the work spindle, coolant discharged to the work spindle will splash onto the camera. As a result, the operator cannot observe the machining area from multiple directions. Therefore, there is a need to devise the location of the camera in order to prevent coolant from adhering to the camera.

### Solution to Problem

As an example of the present disclosure, a machine tool capable of machining a workpiece using a tool is provided. The machine tool includes: a cover body that forms a machining area for machining the workpiece as a compartment; a discharge unit configured to discharge coolant to the workpiece; a first work spindle configured to hold the workpiece so that the workpiece is rotatable; a tool spindle located at a position higher than the first work spindle and holding the tool so that the tool is rotatable; and a plurality of cameras arranged within the machining area. Each of the plurality of cameras is arranged at a position that is higher than the first work spindle, and is lower than a ceiling in the machining area so that a machining point of the workpiece, where machining by the tool takes place, is included in a shooting view field of the camera.

As an example of the present disclosure, the machine tool further includes a drive unit capable of moving the tool spindle within the machining area. Each of the plurality of cameras is arranged so that the machining point is included in the shooting view field of the camera regardless of which position within the machining area the tool spindle is located.

As an example of the present disclosure, the cover body has a door that leads to the machining area. Each of the plurality of cameras is arranged on a rear side of the door and on a front side of the first work spindle when viewed in a front view showing the machining area through the door.

As an example of the present disclosure, the tool spindle is arranged on a rear side of the first work spindle when viewed in the front view.

As an example of the present disclosure, the plurality of cameras include: a first camera; and a second camera. The first camera is provided on a first side surface within the machining area. The second camera is provided on a second side surface within the machining area. The second side surface faces the first side surface.

As an example of the present disclosure, the plurality of cameras further include a third camera. The second camera and the third camera are lined up in the gravity direction on the second side surface.

As an example of the present disclosure, the machine tool further includes: a second work spindle configured to support the workpiece from a side opposite to the first work spindle. Each of the plurality of cameras is arranged at a position higher than the second work spindle.

The above and other objects, features, aspects, and advantages of the present invention will become apparent from the following detailed description of the present invention as understood in connection with the accompanying drawings.

### Brief Description of Drawings

FIG. 1 is a diagram showing an example of appearance of a machine tool.
FIG. 2 is a diagram showing an example of a device configuration of the machine tool.
FIG. 3 is a diagram showing an example of control mechanism of the machine tool.
FIG. 4 is a front view showing a machining area from a door side of the machine tool.
FIG. 5 is a plan view showing the machining area from above the machine tool.
FIG. 6 is a front view showing the machining area from the door side of the machine tool.
FIG. 7 is a plan view showing the machining area from above the machine tool.
FIG. 8 is a front view showing the machining area from the door side of the machine tool.
FIG. 9 is a plan view showing the machining area from above the machine tool.

### Description of Embodiments

Hereinafter, embodiments according to the present invention will be described with reference to the drawings. In the following description, the same members and constituent components are denoted by the same reference numerals. They also have the same names and functions. Accordingly, redundant descriptions thereof will not be repeated. Note that the embodiments and modifications described herein may be selectively combined with each other as appropriate.

### A. Appearance of Machine Tool 100

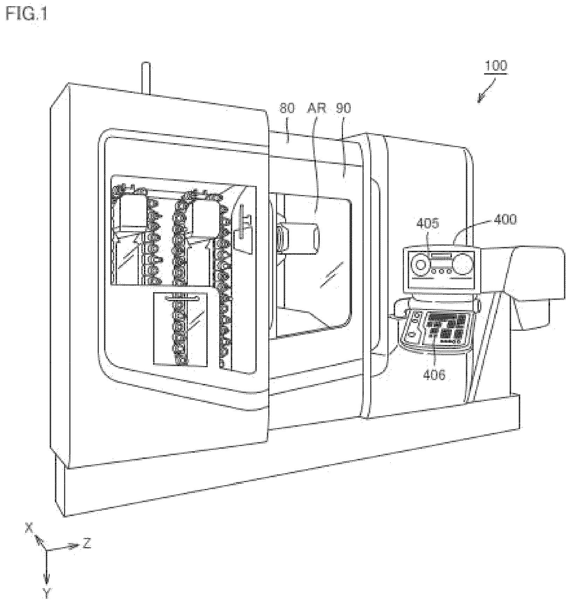

First, appearance of a machine tool 100 will be described with reference to FIG. 1. FIG. 1 is a diagram showing an example of the appearance of the machine tool 100.

The machine tool 100 includes a cover body 80. The cover body 80 forms the exterior of the machine tool 100 and forms a machining area AR for machining a workpiece as a compartment.

Also, the machine tool 100 has a door 90. The door 90 may be configured to be openable and closeable manually by the operator or automatically by a drive mechanism such as a motor. As an example of a working process, the operator opens the door 90 and sets a workpiece, which is a machining target, in the machining area AR. The operator then closes the door 90 and starts machining the workpiece. When the machining of the workpiece is completed, the operator opens the door 90 and removes the machined workpiece from the machining area AR.

The machine tool 100 is provided with an operation panel 400. The operation panel 400 includes a display 405 for displaying various types of machining-related information, and operation keys 406 for receiving various types of operations on the machine tool 100.

### B. Definition of Directions

In the following, the horizontal direction leading from the door 90 toward the machining area AR is also referred to as an X-axis direction. The horizontal direction orthogonal to the X-axis direction is also referred to as a Z-axis direction. The gravity direction orthogonal to both the X-axis and Y-axis directions is also referred to as a Y-axis direction.

### C. Device Configuration of Machine Tool 100

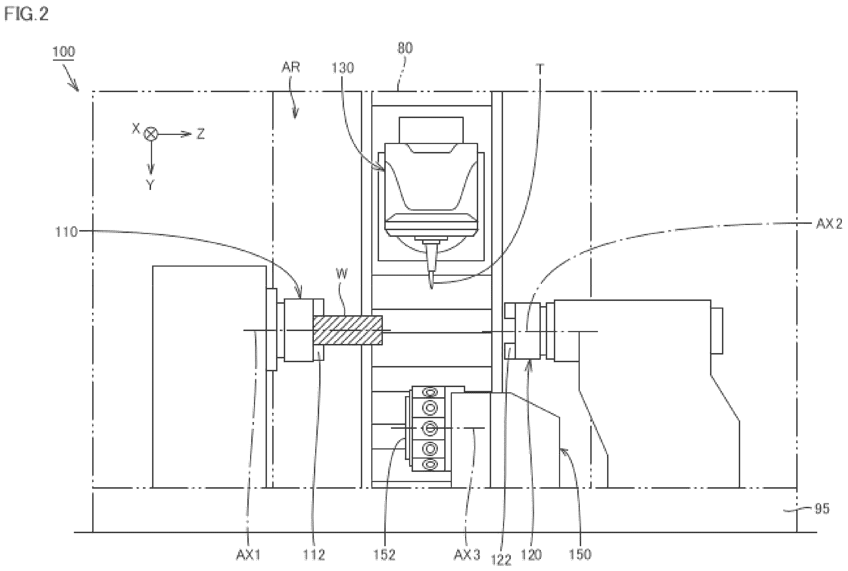

Next, a device configuration of the machine tool 100 will be described with reference to FIG. 2. FIG. 2 is a diagram showing an example of the device configuration of the machine tool 100.

The machine tool 100 is, for example, a multitasking machine having a lathe turning function of machining a workpiece by bringing a tool into contact with the rotating workpiece, and a milling function of machining a workpiece by bringing the rotating tool into contact with the workpiece.

The machine tool 100 serving as a multitasking machine includes, for example, a bed 95, a first work spindle 110, a second work spindle 120, a tool spindle 130, and a blade rest 150.

The bed 95 is a base member for supporting various components provided in the machine tool 100. In the example of FIG. 2, the bed 95 supports the first work spindle 110, the second work spindle 120, the tool spindle 130, and the blade rest 150. The bed 95 is installed on the floor of a factory or the like. The bed 95 is made of metal such as cast iron.

The first work spindle 110 is configured to be rotatable while holding a workpiece W. More specifically, the first work spindle 110 is provided with a first chuck mechanism 112. The first chuck mechanism 112 is a mechanism for fixing the workpiece W to the first work spindle 110. The first work spindle 110 is configured to be rotatable about an axis AX1 along the axial direction of the first work spindle 110.

The second work spindle 120 rotates the workpiece W while supporting the workpiece W from a side opposite to the first work spindle 110. More specifically, the second work spindle 120 is configured to be movable in the Z-axis direction by various drive mechanisms such as motors, and supports the workpiece W from the side opposite to the first work spindle 110. Also, the second work spindle 120 is provided with a second chuck mechanism 122. The second chuck mechanism 122 is a mechanism for fixing the workpiece W to the second work spindle 120. Further, the second work spindle 120 is configured to be rotatable about an axis AX2 along the axial direction of the second work spindle 120.

The tool spindle 130 is provided at a position higher than the first work spindle 110 and the second work spindle 120. The tool spindle 130 is also configured to be rotatable while holding a tool T. The tool spindle 130 is furthermore configured to be movable in the X-axis, Y-axis, and Z-axis directions by various drive mechanisms such as motors. The tool spindle 130 performs milling machining by bringing the rotating tool T into contact with the workpiece W fixed to the first work spindle 110.

The blade rest 150 includes a turret 152. The turret 152 is configured to be turnable about an axis AX3 that is parallel to the Z direction. The turret 152 holds a plurality of tools spaced circumferentially around the axis AX3. Also, the blade rest 150 is configured to be movable in the X-axis and Y-axis directions by various drive mechanisms such as motors. The blade rest 150 performs lathe turning machining by bringing the fixed tool held by the turret 152 into contact with the workpiece W driven to rotate by the first work spindle 110.

### D. Control Configuration of Machine Tool 100

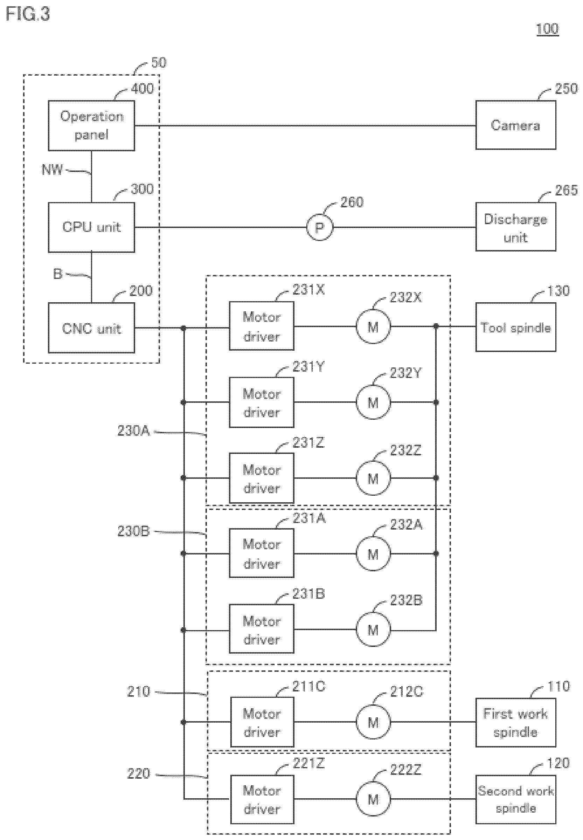

Next, a control mechanism of the machine tool 100 will be described with reference to FIG. 3. FIG. 3 is a diagram showing an example of the control mechanism of the machine tool 100.

As shown in FIG. 3, the machine tool 100 includes a control unit 50, drive units 210, 220, 230A, and 230B, cameras 250, a discharge pump 260, and a discharge unit 265.

The control unit 50 is a device for controlling the machine tool 100. There is no limitation to the device configuration of the control unit 50. The control unit 50 may be constituted by a single control unit or a plurality of control units. In the example of FIG. 3, the control unit 50 is constituted by a CPU (Central Processing Unit) unit 200, a CNC (Computer Numerical Control) unit 300, and the operation panel 400.

The drive unit 210 is a drive mechanism for driving the first work spindle 110. The drive unit 210 may be constituted by a single drive unit or a plurality of drive units. In the example of FIG. 3, the drive unit 210 is constituted by a motor driver 211C and a motor 212C.

The motor driver 211C successively receives input of a target position from the control unit 50, and controls the motor 212C. With this, the workpiece held by the first work spindle 110 rotates with the axial direction of the first work spindle 110 (i.e., the Z-axis direction) used as its rotation center. The motor 212C may be an AC motor, a stepping motor, a servomotor, or any other type of motor.

The drive unit 220 is a drive mechanism for driving the second work spindle 120. The drive unit 220 may be constituted by a single drive unit or a plurality of drive units. In the example of FIG. 3, the drive unit 220 is constituted by a motor driver 221Z and a motor 222Z.

The motor driver 221Z successively receives input of a target position from the control unit 50, and controls the motor 222Z. With this, the motor 222Z moves the second work spindle 120 to a certain position in the Z direction. The motor 222Z may be an AC motor, a stepping motor, a servomotor, or any other type of motor.

The drive unit 230A is a drive mechanism for shifting the position of the tool spindle 130. The drive unit 230A may be constituted by a single drive unit or a plurality of drive units. In the example of FIG. 3, the drive unit 230A is constituted by motor drivers 231X to 231Z, and motors 232X to 232Z.

The motor driver 231X successively receives input of a target position from the control unit 50, and controls the motor 232X. With this, the motor 232X drives the tool spindle 130 to a certain position in the X direction. The motor 232X may be an AC motor, a stepping motor, a servomotor, or any other type of motor.

The motor driver 231Y successively receives input of a target position from the control unit 50, and controls the motor 232Y. With this, the motor 232Y drives the tool spindle 130 to a certain position in the Y direction. The motor 232Y may be an AC motor, a stepping motor, a servomotor, or any other type of motor.

The motor driver 231Z successively receives input of a target position from the control unit 50, and controls the motor 232Z. With this, the motor 232Z moves the tool spindle 130 to a certain position in the Z direction. The motor 232Z may be an AC motor, a stepping motor, a servomotor, or any other type of motor.

The drive unit 230B is a drive mechanism for driving and rotating the tool spindle 130. The drive unit 230B may be constituted by a single drive unit or a plurality of drive units. In the example of FIG. 3, the drive unit 230B is constituted by motor drivers 231A and 231B, and motors 232A and 232B.

The motor driver 231A successively receives input of a target rotation speed from the control unit 50, and controls the motor 232A. The motor 232A drives the tool spindle 130 so that it turns about the X direction. The motor 232A may be an AC motor, a stepping motor, a servomotor, or any other type of motor.

The motor driver 231B successively receives input of a target position from the control unit 50, and controls the motor 232B. The motor 232B drives the tool spindle 130 so that it rotates with the axial direction of the tool spindle 130 used as the rotation center. The motor 232B may be an AC motor, a stepping motor, a servomotor, or any other type of motor.

The cameras 250 are provided in the machining area AR of the machine tool 100 and shoot the machining area AR. The cameras 250 are connected to the operation panel 400, for example. The operation panel 400 displays moving images from the cameras 250 on the above-mentioned display 405. This allows the operator to check the situation inside the machine tool 100.

The discharge unit 265 is provided in the machining area AR of the machine tool 100 and discharges coolant toward the tool or workpieces. The discharge unit 265 is controlled by the CPU unit 300, for example. The CPU unit 300 controls the discharge pump 260 connected to the discharge unit 265, and controls, for example, the amount of coolant discharged by the discharge unit 265.

### E. Location of Cameras 250

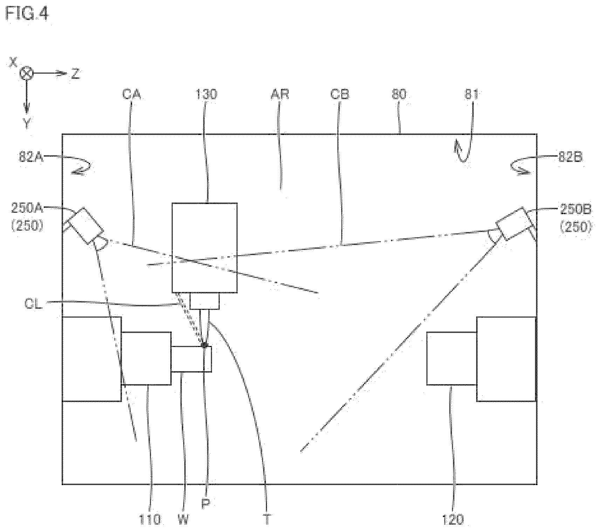

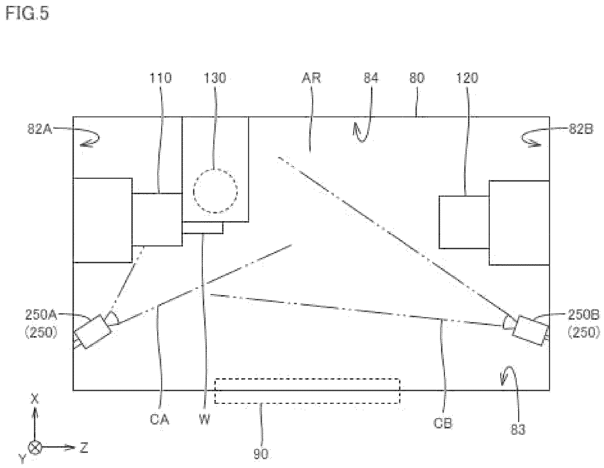

Next, the locations of the cameras 250 in the machine tool 100 will be described with reference to FIGS. 4 and 5. FIG. 4 is a front view showing the machining area AR from the door 90 side. FIG. 5 is a plan view showing the machining area AR from above.

The plurality of cameras 250 are arranged within the machining area AR. In the examples of FIGS. 4 and 5, two cameras 250A and 250B are arranged within the machining area AR.

The above-described discharge unit 265 is provided on the tool spindle 130 and discharges coolant CL toward the workpiece W held on the first work spindle 110, for example. The coolant CL discharged onto the workpiece W splashes in various directions. If the cameras 250A and 250B are provided at positions lower than the first work spindle 110, the splashed coolant CL will be more likely to adhere to the cameras 250A and 250B. Therefore, the cameras 250A and 250B are arranged at positions higher than the first work spindle 110 in the gravity direction. This can prevent the coolant CL from splashing from the first work spindle 110 to the cameras 250A and 250B.

Preferably, the tool spindle 130 is provided at a position higher than the first work spindle 110. The cameras 250A and 250B are arranged at positions higher than the tool spindle 130 during the machining of the workpiece W. This further suppresses the splashing of the coolant CL to the cameras 250A and 250B.

When the cameras 250A and 250B are arranged on a ceiling 81 in the machining area AR, a machining position (hereinafter also referred to as "machining point P") of the workpiece W, where machining by the tool T takes place, may be blocked by the tool spindle 130 and may not be captured by any of the cameras 250A and 250B. Therefore, the cameras 250A and 250B are arranged at positions lower than the ceiling 81 so that the machining point P is included in shooting view fields CA and CB. More specifically, the cameras 250A and 250B are arranged to view the workpiece W obliquely downward from above so that each imaging optical axis passes between the first work spindle 110 and the tool spindle 130. This allows the cameras 250A and 250B to shoot the machining point P from various directions without being blocked by the tool spindle 130.

Note that the tool spindle 130 may be driven by the above-described drive unit 230A. In this case, the position of the tool spindle 130 changes within the machining area AR. Taking this fact into account, the cameras 250A and 250B are arranged so that the machining point P is included in the shooting view fields CA and CB regardless of which position within the machining area AR the tool spindle 130 is located. In other words, the camera 250A is arranged so that a straight line connecting the camera 250A and the machining point P is not interrupted by an area where the tool spindle 130 is movable, and the camera 250B is arranged so that a straight line connecting the camera 250B and the machining point P is not interrupted by the area where the tool spindle 130 is movable. This allows the cameras 250A and 250B to shoot the machining point P regardless of the location of the tool spindle 130. Note that if there are three or more cameras, the cameras may be arranged so that at least two cameras can shoot the machining point P regardless of the location of the tool spindle.

The camera 250A is provided on a side surface 82A (first side surface) within the machining area AR. The camera 250B is provided on a side surface 82B (second side surface) within the machining area AR. The side surfaces 82A and 82B are part of the walls constituting the machining area AR, and face each other. As a result of the camera 250A being provided on the side surface 82A and the camera 250B being provided on the side surface 82B, the cameras 250A and 250B can shoot the machining point P from opposite directions.

The cameras 250A and 250B are located on the rear side of the door 90 and on the front side of the first work spindle 110 when viewed in the front view showing the machining area AR through the door 90 from a front 83. In other words, the cameras 250A and 250B are located between the door 90 and the first work spindle 110 when viewed in the front view. This allows the cameras 250A and 250B to shoot the machining point P from the front side without being obstructed by any device located on the rear side of the first work spindle 110.

An example of a device located on the rear side of the first work spindle 110 is the tool spindle 130. In this case, the devices are arranged in the order of "the cameras 250A and 250B, the first work spindle 110, and the tool spindle 130" from the door 90 side. This allows the cameras 250A and 250B to shoot the machining point P from the front side without being obstructed by the tool spindle 130.

Note that although the positional relationship between the first work spindle 110, the tool spindle 130, and the cameras 250A and 250B has mainly been described above, the same is true for the positional relationship between the second work spindle 120, the tool spindle 130, and the cameras 250A and 250B.

As an example, the cameras 250A and 250B are arranged at positions higher than the second work spindle 120 in the gravity direction. This can prevent the coolant CL from splashing from the second work spindle 120 to the cameras 250A and 250B.

Also, the cameras 250A and 250B are located on the rear side of the door 90 and on the front side of the second work spindle 120 when viewed in the front view showing the machining area AR through the door 90 from the front 83. In other words, the cameras 250A and 250B are located between the door 90 and the second work spindle 120 when viewed in the front view. This allows the cameras 250A and 250B to shoot the machining point P from the front side without being obstructed by any device located on the rear side of the second work spindle 120.

An example of a device located on the rear side of the second work spindle 120 is the tool spindle 130. In this case, the devices are arranged in the order of "the cameras 250A and 250B, the second work spindle 120, and the tool spindle 130" from the door 90 side. This allows the cameras 250A and 250B to shoot the machining point P from the front side without being obstructed by the tool spindle 130.

### F. Usage of Images

Next, the usage of moving images obtained from the above-described cameras 250A and 250B will be described.

As an example, the moving images obtained from the above-described cameras 250A and 250B are displayed on the display 405 of the operation panel 400. At this time, the operation panel 400 switches the moving images of the cameras 250A and 250B in response to a user operation on the operation keys 406. With this, the operator can check the situation of the machining point P from multiple directions.

As another example, the machine tool 100 stores moving images for a predetermined time period including the timing at which a predetermined machining defect has occurred. More specifically, the machine tool 100 sequentially stores the moving images obtained from the cameras 250A and 250B in a volatile memory area. When the data size of the moving images in the memory area exceeds a predetermined amount, the machine tool 100 overwrites the old moving images with new moving images. In response to the occurrence of a predetermined machining defect, the machine tool 100 transfers moving images for a predetermined time period including the timing at which the machining defect has occurred to a non-volatile memory area. With this, the moving images before and after the occurrence of the machining defect are stored, and the operator can search for the cause of the machining defect that occurred around the machining point P.

Note that the performance of the camera 250A and the performance of the camera 250B may be the same or different. The parts of the cameras 250A and 250B are changed as appropriate according to the usage of moving images. As an example, lenses with a wider angle of view may be employed in the respective cameras 250A and 250B, or lenses with a higher maximum magnification may be employed in the respective cameras 250A and 250B.

### G. Modification 1

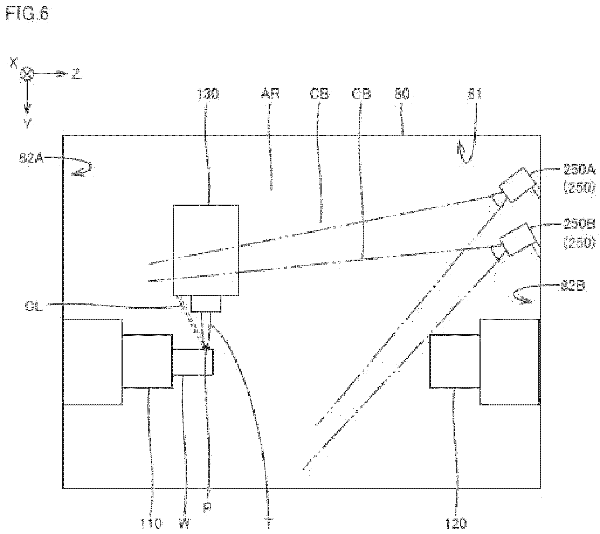

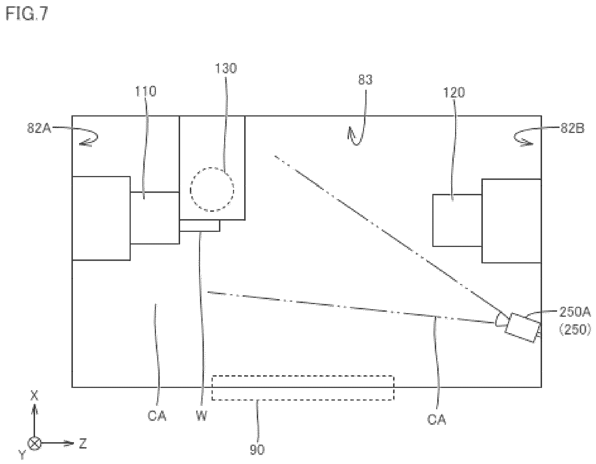

Next, Modification 1 of the arrangement of the cameras 250 will be described with reference to FIGS. 6 and 7. FIG. 6 is a front view showing the machining area AR from the door 90 side. FIG. 7 is a plan view showing the machining area AR from above.

In the examples shown in FIGS. 4 and 5 above, the camera 250A is provided on the side surface 82A and the camera 250B is provided on the side surface 82B. In contrast thereto, in the present modification, the cameras 250A and 250B are provided on the same surface. In the examples in FIGS. 6 and 7, the cameras 250A and 250B are provided on the same side surface 82B. Other features are as described above, so redundant descriptions of these features will not be repeated below.

The cameras 250A and 250B are lined up in the gravity direction on the side surface 82B in the machining area AR, for example. At this time, the cameras 250A and 250B are spaced at a predetermined distance from each other. This allows the cameras 250A and 250B to shoot the machining point P with a parallax of the predetermined distance. The operator can easily grasp the distance by switching the display of moving images of the cameras 250A and 250B.

Note that although the cameras 250A and 250B are provided on the side surface 82B in the examples in FIGS. 6 and 7, they may be provided on the side surface 82A.

### H. Modification 2

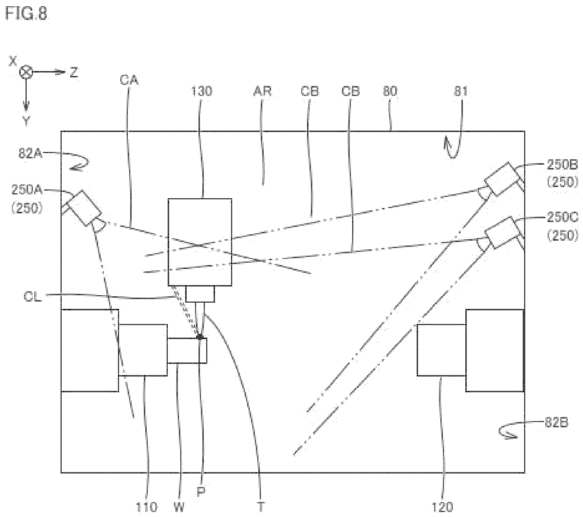

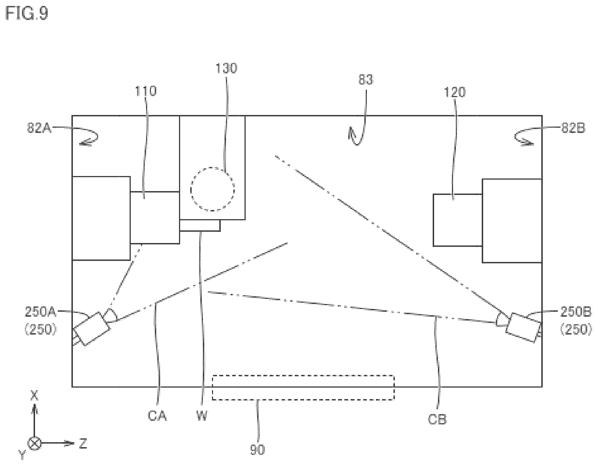

Next, Modification 2 of the arrangement of the cameras 250 will be described with reference to FIGS. 8 and 9. FIG. 8 is a front view showing the machining area AR from the door 90 side. FIG. 9 is a plan view showing the machining area AR from above.

In the examples in FIGS. 4 and 5 above, two cameras 250A and 250B are arranged within the machining area AR. In contrast thereto, in the present modification, three cameras 250A to 250C are arranged within the machining area AR. Other features are as described above, so redundant descriptions of these features will not be repeated below.

In the present modification, the camera 250A is provided on the side surface 82A within the machining area AR. Also, the cameras 250B and 250C are provided on the side surface 82B, which faces the side surface 82A. The operator can check the machining point P from various directions by switching the display of moving images of the cameras 250A to 250C.

Also, the cameras 250B and 250C are lined up in the gravity direction on the side surface 82B. At this time, the cameras 250B and 250C are spaced at a predetermined distance from each other. This allows the cameras 250B and 250C to shoot the machining point P with a parallax of the predetermined distance. The operator can easily grasp the distance by switching the display of moving images of the cameras 250B and 250C.

Note that although the three cameras 250A to 250C are provided within the machining area AR in the examples in FIGS. 8 and 9, four or more cameras may be provided within the machining area AR.

### I. Modification 3

The description above has been given on the assumption that the machine tool 100 is a multitasking machine having the lathe turning function and the milling function. However, the machine tool 100 need not be a multitasking machine. As an example, the machine tool 100 may be a horizontal or vertical machining center.

The machine tool 100 serving as a machining center only includes the tool spindle 130 without including the above-described first and second work spindles 110 and 120. Therefore, the locations of the cameras 250A and 250B in the machining area AR depend on the positional relationship with the tool spindle 130.

More specifically, the cameras 250A and 250B are provided at positions higher than the tool spindle 130 during machining of the workpiece W. This can suppress the coolant CL from adhering to the cameras 250A and 250B. Preferably, the cameras 250A and 250B are lined up at the same height.

Also, the cameras 250A and 250B are arranged at positions lower than the ceiling 81 within the machining area AR so that the machining point P of the workpiece W is included in the shooting view fields CA and CB. This allows the cameras 250A and 250B to shoot the machining point P without being blocked by the tool spindle 130.

The embodiments disclosed herein are to be considered illustrative in all respects and not restrictive. The scope of the present invention is defined not by the above descriptions but by the claims, and is intended to encompass all modifications within the meanings and scope that are equivalent to the claims.

### List of Reference Numerals

50: Control unit, 80: Cover body, 81: Ceiling, 82A: Side surface, 82B: Side surface,
83: Front, 90: Door, 95: Bed, 100: Machine tool, 110: First work spindle,
112: First chuck mechanism, 120: Second work spindle, 122: Second chuck mechanism,
130: Tool spindle, 150: Blade rest, 152: Turret, 200: CPU unit, 210: Drive unit,
211C: Motor driver, 212C: Motor, 220: Drive unit, 221Z: Motor driver, 222Z: Motor,
230A: Drive unit, 230B: Drive unit, 231A: Motor driver, 231B: Motor driver,
231X: Motor driver, 231Y: Motor driver, 231Z: Motor driver, 232A: Motor,
232B: Motor, 232X: Motor, 232Y: Motor, 232Z: Motor, 250: Camera, 250A: Camera,
250B: Camera, 250C: Camera, 260: Discharge pump, 265: Discharge unit,
300: CPU unit, 300: CNC unit, 400: Operation panel, 405: Display, 406: Operation key

## Claims

1. A machine tool capable of machining a workpiece using a tool, comprising:
a cover body that forms a machining area for machining the workpiece as a compartment;
a discharge unit configured to discharge coolant to the workpiece;
a first work spindle configured to hold the workpiece so that the workpiece is rotatable;
a tool spindle located at a position higher than the first work spindle and holding the tool so that the tool is rotatable; and
a plurality of cameras arranged within the machining area,
wherein each of the plurality of cameras is arranged at a position that is higher than the first work spindle, and is lower than a ceiling in the machining area so that a machining point of the workpiece, where machining by the tool takes place, is included in a shooting view field of the camera.

2. The machine tool according to claim 1, further comprising:
a drive unit capable of moving the tool spindle within the machining area,
wherein each of the plurality of cameras is arranged so that the machining point is included in the shooting view field of the camera regardless of which position within the machining area the tool spindle is located.

3. The machine tool according to claim 1 or 2,
wherein the cover body has a door that leads to the machining area, and
each of the plurality of cameras is arranged on a rear side of the door and on a front side of the first work spindle when viewed in a front view showing the machining area through the door.

4. The machine tool according to claim 3,
wherein the tool spindle is arranged on a rear side of the first work spindle when viewed in the front view.

5. The machine tool according to claim 1 or 2,
wherein the plurality of cameras include:
a first camera; and
a second camera,
wherein the first camera is provided on a first side surface within the machining area,
the second camera is provided on a second side surface within the machining area, and
the second side surface faces the first side surface.

6. The machine tool according to claim 5,
wherein the plurality of cameras further include a third camera, and
the second camera and the third camera are lined up in the gravity direction on the second side surface.

7. The machine tool according to claim 1 or 2, further comprising:
a second work spindle configured to support the workpiece from a side opposite to the first work spindle,
wherein each of the plurality of cameras is arranged at a position higher than the second work spindle.
